# EUROPÄISCHE PATENTSCHRIFT

(11) **EP 1 620 366 B1**
(45) Veröffentlichungstag und Bekanntmachung des Hinweises auf die Patenterteilung: **12.11.2008**
(21) Anmeldenummer: 04725059.2
(22) Anmeldetag: 01.04.2004
(51) Int. Cl.: C03B 23/057, C03B 23/13, G01N 27/36

(54) **VERFAHREN UND VORRICHTUNG ZUR HERSTELLUNG VON GLASKÖRPERN**
METHOD AND DEVICE FOR PRODUCING GLASS BODIES
PROCEDE ET DISPOSITIF POUR FABRIQUER DES OBJETS EN VERRE

(30) Priorität: 02.04.2003 DE 10315161
(43) Veröffentlichungstag der Anmeldung: 01.02.2006
(73) Patentinhaber: Mettler-Toledo AG, 8606 Greifensee (CH)
(72) Erfinder: HALLER, Wolfgang, Chevy Chase, MD 20815-4557 (US); HAYOZ, Othmar, CH-8902 Urdorf (CH); MERINO, David, CH-8003 Zürich (CH); ALLENSPACH, Thomas, CH-5627 Besenbüren (CH)
(86) Internationale Anmeldenummer: PCT/EP2004/050407
(87) Internationale Veröffentlichungsnummer: WO 2004/087592

(56) Entgegenhaltungen:
- CH-A- 670 516
- US-A- 3 445 256
- US-A- 3 523 777
- US-A- 3 855 095
- US-B1- 6 354 901

## Beschreibung

Die Erfindung betrifft ein Verfahren und eine Vorrichtung zur Bearbeitung von mehrwandigen Glaskörpern sowie einen Glaskörper und eine mit diesem Glaskörper versehene Messsonde nach dem Oberbegriff des Patentanspruchs 1, 10, 16, bzw. 18.

Die Erfindung betrifft insbesondere ein Verfahren und eine Vorrichtung zur Bearbeitung von mit Messkomponenten versehenen Glaskörpern für chemische Sensoren, insbesondere pH-Elektroden, wie sie beispielsweise in den Produktblättern; [1], "Low-maintenance pH electrodes and systems" vom September 2002; [2], "InPro 2000 pH-Elektroden mit Flüssigelektrolyt und integriertem Temperaturfühler" vom Oktober 2000; oder [3], "InPro 3200(SG) pH-Elektroden mit Gelelektrolyt und integriertem Temperaturfühler" vom Januar 2002; der Mettler-Toledo GmbH, CH-8902 Urdorf beschrieben sind.

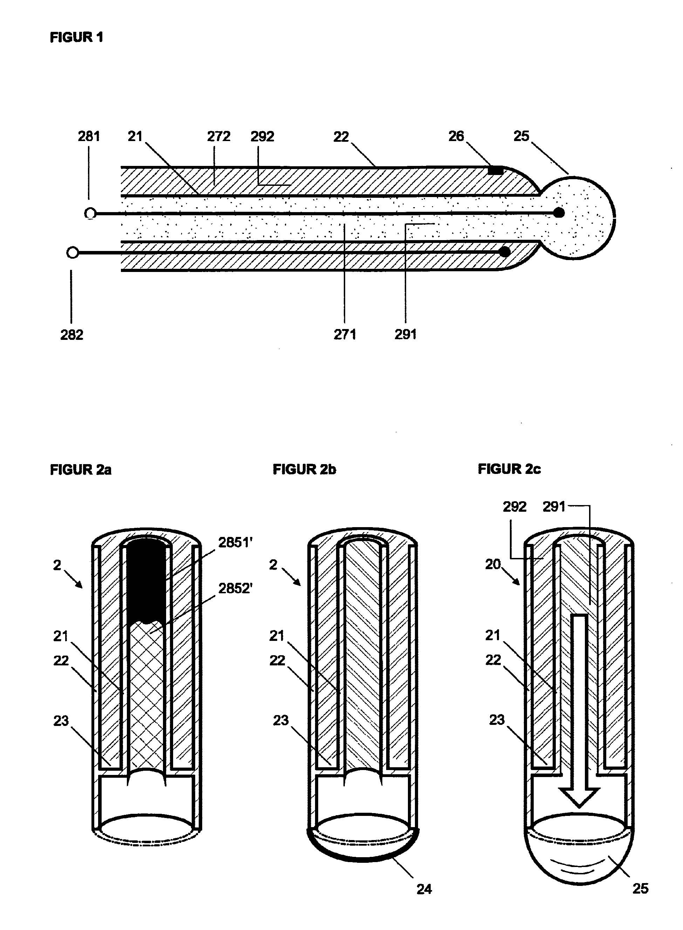

Der prinzipielle Aufbau der pH-Elektroden, die als Einstabmessketten eine Glaselektrode und eine Vergleichselektrode umfassen, ist in [2] und [3] sowie nachstehend in Figur 1 gezeigt. In der Einstabmesskette sind die mit einem Ableitelement 281 versehene Glaselektrode und die mit einem Bezugselement 282 versehene Vergleichselektrode konstruktiv zusammengebaut. Die Glaselektrode wird ringförmig von der Vergleichselektrode umgeben. Die Funktionsweise dieser pH-Elektroden ist in [4], Charles E. Mortimer, Chemie, Das Basiswissen der Chemie, 5. Auflage, Georg Thieme Verlag, New York 1987, Seiten 337-338 anhand des Versuchsaufbaus von Abbildung 20.9 beschrieben.

Das normalerweise aus Silber/Silberchlorid bestehende Ableitelement 281 ist in einer ersten Kammer 291 innerhalb eines Innenrohrs 21 und einer daran anschliessenden dünnwandigen Glashalbkugel bzw. Glasmembran 25 in eine Lösung mit definiertem pH-Wert bzw. einen Innenpuffer 271 getaucht (betreffend Pufferlösungen siehe [4], Seite 282), der die leitfähige Verbindung zwischen der Innenseite der Glasmembran 25 und dem Ableitelement 281 darstellt.

Die semipermeable Glasmembran 25 ist pH-sensitiv. An ihr erfolgt die Bildung eines Potentials, das ein direktes Mass für den pH-Wert der geprüften Lösung bzw. des Messguts ist. Sobald die pH-Elektrode in das Messgut eintaucht, beginnt die Glasmembran 25 an der Aussenseite zu quellen, d.h. Na⁺ wird durch H⁺ ersetzt. Die innere Seite ist ständig gequollen, da sie immer vom Innenpuffer 271 benetzt wird. Üblicherweise wird der pH-Wert des Innenpuffers bei pH7 eingestellt (neutral). In diese Quellschichten, die eine Stärke von < 0,0001 mm haben, können die Wasserstoffionen der Lösung bzw. die Ionen des Innenpuffers hinein diffundieren. Taucht die pH-Elektrode in das Messgut ein, das genau soviel Protonen hat wie der Innenpuffer 271, ist die Differenz der Ladungen zwischen Innenpuffer 271 und Messgut idealerweise gleich 0. Das bedeutet, an der pH-Elektrode entsteht kein Potential. Daraus kann abgeleitet werden, dass der pH-Wert des Messguts auch 7 ist. Hat das Messgut mehr oder weniger positive Ladungen als der Innenpuffer 271, ergibt sich eine Potentialdifferenz entsprechender Polarität.

Das Spannungspotential, das am Ableitelement 281 entsteht, wird mit dem am Bezugselement 282 entstehenden Spannungspotential verglichen, das unabhängig von der Ionenkonzentration im Messgut idealerweise konstant ist. Die Differenz zwischen den beiden Spannungspotentialen bildet das eigentliche Messsignal, das Auskunft über die Ionenkonzentration im Messgut gibt.

Das Bezugselement ist in einen Elektrolyten, normalerweise eine KC1-Lösung 272, eingetaucht und ionenmässig leitfähig mit diesem verbunden. Die in einer zweiten Kammer 292 zwischen der Aussenwand des Innenrohrs 21 und der Innenwand des Aussenrohrs 22 eingeschlossene KC1-Lösung 272 diffundiert langsam durch eine poröse Trennwand bzw. ein Diaphragma 26 in das Messgut und stellt dabei die elektrische Verbindung mit diesem her. Es ist wichtig, dass das Diaphragma 26 flüssigkeitsdurchlässig für die KC1-Lösung 272 ist, andererseits soll aber kein Messgut von aussen in die KCl-Lösung 272 eindringen. Das kann beispielsweise dadurch verhindert werden, dass der Spiegel der KCl-Lösung 272 immer höher gehalten wird als der Spiegel des Messguts. Ferner soll die Diffusion der KCl-Lösung 272 nach aussen möglichst hoch sein, damit ein kleiner elektrischer Innenwiderstand gewährleistet wird. Das Diaphragma 26 ist daher eine poröse, Trennstelle zwischen der KCl-Lösung 272 und dem Messgut, welche normalerweise unterschiedliche Ionenkonzentrationen aufweisen. Einerseits verhindert das Diaphragma 26, dass sich die Lösungen ausgleichen können, andererseits wird es jedoch von einem Ionenstrom durchflossen.

Die Glasmembran 25 besteht aus einem Spezialglas von beispielsweise 0,3-0,5 mm Stärke, das aus Gründen der mechanischen Stabilität vorzugsweise zu einer Halbkugel aufgeblasen wird. Dessen Zusammensetzung ist beispielsweise 72% Si02, 22% Na20 und 6 % CaO, welche durch Zusammenschmelzen entsprechender Mengen Si02, Na2C03 und CaC03 herstellbar ist.

Zur Herstellung des Glaskörpers der pH-Elektroden wird vorzugsweise ein Tauchrohr 2 verwendet, das, wie in Figur 2a gezeigt, ein Aussenrohr 22 aufweist, dessen Innenwand mittels eines Tellers 23 derart mit einem Innenrohr 21 verbunden ist, dass eine erste, einseitig durch die Glasmembran 25 abzuschliessende Kammer 291 und eine zweite, einseitig durch den Teller 23 abgeschlossene Kammer 292 gebildet werden.

Zur Bildung der Glasmembran 25 wird das Tauchrohr 2 in einen Schmelztiegel geführt und eine kleine Menge geschmolzenen Glases, ein so genannter Glasposten 24 entnommen, der sich, wie in Figur 2b gezeigt, mit dem unteren Rand des Aussenrohrs 22 verbindet. Durch Zufuhr eines gasförmigen Mediums kann der Glasposten 24 zu einer dünnwandigen, halbkugelförmigen Glasmembran 25 geblasen werden, wodurch der in Figur 2c gezeigte Glaskörper 20 geschaffen wird.

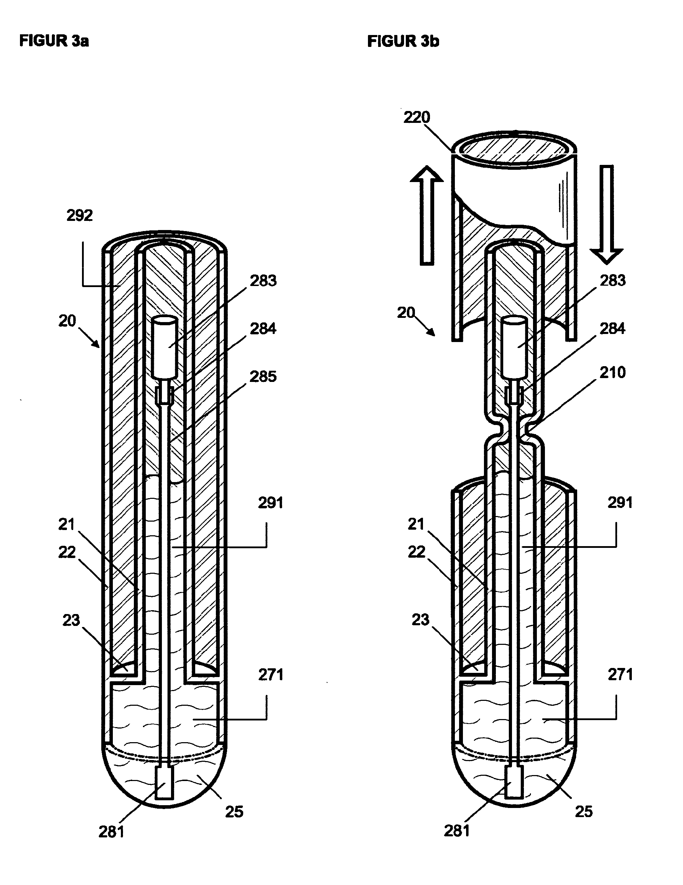

Figur 3a zeigt den Glaskörper 20 von Figur 2c mit der ersten Kammer 291, in die ein Innenpuffer 271 eingefüllt und ein Ableitelement 281 eingesetzt sind. Das Ableitelement 281 weist einen Anschlussdraht 285 auf, der wie in Figur 3a gezeigt vorzugsweise mittels einer Pressverbindung 284 mit einem Steckkontakt 283 verbunden ist, an den das Messgerät anschliessbar ist. Der Anschlussdraht 285 kann natürlich auch auf andere Weise mit dem Messgerät verbunden werden. Beispielsweise kann ein Anschlussteil des Anschlussdrahts 285 aus dem Glaskörper 20 heraus geführt und kontaktiert, z.B. verlötet werden.

Zum Trennen der ersten und zweiten Kammer 291; 292 wird die erste Kammer 291 nach Einfüllen des Innenpuffers 271 und Einsetzen des Ableitelements 281 vorzugsweise dicht abschlossen. Dadurch werden unter anderem Verunreinigungen des Innenpuffers 271, beispielsweise bei Kontaktierung des Steckkontakts 283, vermieden.

Dazu wurde bisher, wie in Figur 3b gezeigt, ein Teil 220 des Aussenrohrs 22 entfernt, um das Innenrohr 21 freizulegen und einen Teil 210 desselben mittels eines Brenners erwärmen und verschmelzen zu können. Durch das verschmolzene Teil 210 des Innenrohrs 21 wird daher die erste Kammer 291 abgeschlossen wodurch das Austreten des Innenpuffers 271 oder das Eindringen von Fremdstoffen verhindert wird.

Nach dem Verschmelzen des Innenrohrs sind die voneinander getrennten Teile des Aussenrohrs 22 wieder miteinander zu verbinden, wobei auf eine präzise koaxiale Ausrichtung derselben zu achten ist, damit beispielsweise eine mit dem bearbeiteten Glaskörpers 20 versehene pH-Elektrode präzise in entsprechende Aufnehmer, beispielsweise in eine Armatur eingesetzt werden kann.

Dieses bekannte Verfahren zur Bearbeitung von Glaskörpern bzw. zur Verschmelzung eines Innenrohrs eines mit Messkomponenten versehenen Glaskörpers kann jedoch nur mit erheblichem Aufwand von geübtem Personal durchgeführt werden.

Die CH 670 516 A5 [6] beschreibt ein Verfahren und eine Vorrichtung zum Herstellen einer Flüssigkeitselektrode mit einem Aussenrohr und einem Innenrohr, welches mit einer Lösung gefüllt ist, in welche ein Metallkontakt eingetaucht ist. Der Metallkontakt reicht durch einen hermetischen Verschluss des Innenrohrs, welcher die Flüssigkeit von der Umgebung trennt, hindurch. Das Verfahren zeichnet sich dadurch aus, dass das Innenrohr aus einem Glas besteht, welches elektromagnetische Wellen ausgewählter Wellenlängen absorbiert, wobei diese Wellenlängen vom Aussenrohr nahezu ohne Absorption durchgelassen werden. Der hermetische Verschluss entsteht durch Verschmelzen des Innenrohrs, wenn es mit elektromagnetischer Strahlung entsprechender Wellenlänge beaufschlagt wird, schmilzt und um den Metallkontakt herum zusammenfällt.

Als problematisch kann es sich dabei erweisen, dass in einem vorangehenden Prozessschritt, namentlich beim Formen der Membran, die vom geschmolzenen Glas im Tiegel abgestrahlte Wärme vom Material des Innenrohrs absorbiert wird und die Verbindung zwischen Innenrohr und Aussenrohr, beispielsweise über den oben genannten Teller, gelöst wird. Hierfür schlägt die CH 670 516 A5 [6] vor, das Innenrohr aus zwei verschiedenen Glasarten herzustellen, wobei dessen unterer Abschnitt aus der gleichen Glasart, wie das Aussenrohr und dessen oberer Abschnitt aus der elektromagnetische Wellen absorbierenden Glasart bestehen.

Die Herstellung eines aus zwei Glasarten bestehenden Innenrohrs mit einer eine Schmelznaht aufweisenden Kontaktstelle ist relativ aufwändig und daher teuer. Ferner besteht die Gefahr, dass die Rohrwand im Bereich der Verschmelzung beim Zusammenfallen den Draht nicht vollständig umschliesst und daher die betreffende Kammer nicht vollständig abgeschlossen werden kann. Insofern erfordert die beschriebene Verschmelzungsmethode das Festlegen einer genauen Zeitdauer der Einwirkung der Strahlung auf das Glas des Innenrohrs. Ausserdem wird die Positionierung der Verschmelzungsstelle am Innenrohr durch den Fokus der einwirkenden Strahlung festgelegt, was einer aufwändigen optischen Justierung bedarf.

Die US 3 855 095 A offenbart eine Glaselektrode mit einem inneren und einem äusseren Glasrohr, wobei das innere Glasrohr vermittels eines schmelzbaren Glaselements verschmolzen wird. Der Verschmelzungsprozess erfolgt durch das Aussenrohr hindurch mittels einer induktiven Heizung, wobei ein Hilfsmittel zur Ankopplung der Wärme an das Glaselement verwendet wird. Auch der Einsatz anderer Strahlungsenergie produzierender Mittel wird in Erwägung gezogen.

Der vorliegenden Erfindung liegt daher die Aufgabe zugrunde, ein verbessertes Verfahren und eine verbesserte Vorrichtung zur Bearbeitung von mehrwandigen Glaskörpern, einen nach diesem verbesserten Verfahren bearbeiteten Glaskörper sowie eine mit diesem Glaskörper versehene Messsonde zu schaffen.

Insbesondere ist ein verbessertes Verfahren zur Bearbeitung von mehrwandigen Glaskörpern anzugeben, mittels dessen innerhalb eines Glaskörpers vorgesehene Kammern mit geringem Aufwand dicht abschliessbar sind.

Ferner ist eine kostengünstig aufgebaute, einfach handhabbare Vorrichtung zu schaffen, mittels derer Glaskörper rasch, vorzugsweise automatisiert, und präzise bearbeitet werden können.

Diese Aufgabe wird mit einem Verfahren und einer Vorrichtung, welche die in Anspruch 1 und 10 angegebenen Merkmale aufweisen. Vorteilhafte Ausgestaltungen der Erfindung sind in weiteren Ansprüchen angegeben.

Das erfindungsgemässe Verfahren und die Vorrichtung dienen der Bearbeitung eines mehrwandigen Glaskörpers, insbesondere eines mit einer Glasmembran versehenen Glaskörpers für einen chemischen Sensor bzw. eine Messsonde, innerhalb dessen wenigstens eine Wand oder ein Innenrohr teilweise zu verschmelzen und dadurch gegebenenfalls eine erste Kammer abzuschliessen ist.

Es wird wenigstens ein der Absorption von Strahlungsenergie dienendes, festes oder pulverförmiges Glaselement in den Bereich des zu verschmelzenden Teils der Wand oder des Innenrohrs geführt und von wenigstens einem Energiestrahler derart mit Strahlungsenergie beaufschlagt, dass das Glaselement und das zu verschmelzende Teil der Wand oder des Innenrohrs ineinander verschmelzen.

Erfindungsgemäss wird eine durch den Schmelzvorgang resultierende Absenkung des Innenrohrs erfasst und der Schmelzvorgang wird entsprechend gesteuert.

Durch das Verschmelzen des Glaselements wird dieses verflüssigt und verformt, so dass der zu verschmelzende, angrenzende Teil des Innenrohrs oder der Wand grossflächig kontaktiert und mit verschmolzen wird. Es ist daher nicht notwendig, dass das Glaselement den zu verschmelzenden Teil des Innenrohrs bereits vor Beginn der Energiezufuhr fest kontaktiert. Das Glaselement kann daher problemlos in den Glaskörper eingeführt und korrekt positioniert werden.

Besonders vorteilhaft lassen sich nach diesem Verfahren Innenrohre von Glaskörpern verschmelzen, die für pH-Elektroden verwendet werden. Die von einem Aussenrohr umschlossene mit einem Innenpuffer gefüllte erste Kammer eines solchen Glaskörpers, die mittels einer Glasmembran einseitig abgeschlossen ist, wird dabei durch Verschmelzen eines Teils des Innenrohrs mit dem Glaselement dicht abgeschlossen. Während dieses Vorgangs wird das Aussenrohr stets einstückig belassen.

Dabei wird ein während der Bearbeitung nicht schmelzender elektrischer Leiter bzw. eine Verbindungsleitung und das wenigstens eine Glaselement in das Innenrohr eingeführt, wobei der elektrische Leiter durch das zu verschmelzende Teil des Innenrohrs hindurch ein in den Innenpuffer hineinragendes Ableitelement mit einem ausserhalb der ersten Kammer angeordneten Steckkontakt verbindet. Diese Verbindungsleitung besteht vorzugsweise aus Edelmetall, beispielsweise Platin, welches während der Bearbeitung des Glaskörpers nicht schmilzt.

Vorzugsweise wird der während der Bearbeitung nicht schmelzende elektrische Leiter bzw. die Verbindungsleitung von einem ringförmigen Glaselement umschlossen, so dass dieses in einfacher Weise korrekt positioniert werden kann.

Das der Absorption von Strahlungsenergie dienende Glaselement enthält vorzugsweise einstückige oder mehrstückige oder in Partikelform vorliegende Metalloxyde, oder Metalle beispielsweise Eisenoxyd, die mittels Zufuhr von Strahlungsenergie, beispielsweise Infrarotstrahlung, oder durch induktive Ankopplung erhitzt werden.

Mit einem Strahlungsenergie absorbierenden Glaselement versehene Glaskörper können daher bearbeitet werden, ohne dass Teile des Aussenrohrs aufgeschnitten werden müssen.

Wesentlich bei diesem Verfahren ist, dass der Schmelzvorgang und die Kräfte, die auf die an die Schmelzzone angrenzenden Teile einwirken, präzise kontrolliert werden. Beispielsweise ist zu verhindern, dass das Innenrohr durchtrennt wird oder andere Teile des Glaskörpers beeinträchtigt werden. Ferner ist zu verhindern, dass während des Schmelzvorgangs nicht mehr starr miteinander verbundene Teile sich gegeneinander verdrehen, wodurch gegebenenfalls die gewünschte Funktionalität oder das Erscheinungsbild des Glaskörpers beeinträchtigt werden.

Zur Lösung dieser Probleme wird der Glaskörper mit dem zu bearbeitenden Teil, beispielsweise dem Innenrohr, derart aufgehängt, dass das Teil des Glaskörpers, das während des Schmelzvorgangs nur durch die Schmelze mit dem befestigten Teil verbunden ist, sich nur in axialer Richtung bzw. entlang der Längsachse des Innenrohrs verschieben kann. Alle Teile des Glaskörpers bleiben daher axial ausgerichtet. Ferner wird beispielsweise mittels eines justierbaren Anschlags vorgesehen, dass sich das nunmehr vermittels der weichen Schmelzzone mit dem befestigten oberen Teil verbundene untere Teil des Innenrohrs nur über eine gewünschte Distanz verschieben kann.

Ferner ist vorzugsweise eine Führungsvorrichtung vorgesehen, welche den Glaskörper während des Schmelzvorgangs präzise entlang einer festgelegten Arbeitsachse führt.

Vorzugsweise wird das der Absorption von Strahlungsenergie dienende Glaselement gleichmässig erwärmt, so dass das umliegende Innerohr nach Verflüssigung des Glaselements gleichmässig kontaktiert wird. Dazu wird das Innenrohr vorzugsweise an der Antriebswelle eines Antriebsmotors befestigt, der den Glaskörper während des Schmelzvorgangs in Rotation versetzt. Dadurch treten Kräfte auf, welche das geschmolzene Material des Glaselements idealerweise ringförmig an das Innenrohr anpressen und dieses gleichmässig erwärmen.

Die Verschiebung des während des Schmelzvorgangs nunmehr vermittels der weichen Schmelzzone mit dem befestigten oberen Teil verbundenen unteren Teils des Tauchrohrs kann ferner vorteilhaft dazu verwendet werden, die Aggregatsänderung des zu verschmelzenden Teils des Innenrohrs zu detektieren und die Energiestrahler derart zu steuern, dass nur das notwendige Mass an Energie auf den Glaskörper bzw. das Innenrohr einwirkt. Vorzugsweise ist ein optischer Sensor, beispielsweise eine Lichtschranke oder eine Kamera vorgesehen, welche die Verschiebung des unterhalb der Schmelzzone befindlichen Teils des Innenrohrs detektiert und einer Steuereinheit meldet. Möglich ist auch die Verwendung weiterer nicht-optischer, beispielsweise kapazitive Sensoren.

Dieselbe Lichtschranke kann ferner als Referenzlinie für die Positionierung des Glaskörpers verwendet werden. Beispielsweise wird der Glaskörper bis zur Referenzlinie abgesenkt und anschliessend um eine feste Distanz wieder in den Wirkungsbereich der Energiestrahler angehoben.

Vorzugsweise ist die Lichtschranke derart positioniert, dass sie als Referenzlinie vor dem Schmelzvorgang und als Detektionslinie während des Schmelzvorgangs verwendbar ist. Selbstverständlich sind jedoch auch mehrere Lichtschranken verwendbar.

Die erfindungsgemässe Vorrichtung weist daher vorzugsweise einen mittels Schienen geführten, motorisch angetriebenen und gesteuerten Schlitten auf, an dem der Glaskörper befestigbar, und der in einen Bereich verschiebbar ist, in dem die von wenigstens einem Energiestrahler abgebbare Strahlungsenergie auf das in den Glaskörper eingesetzte Glaselement einwirken kann. Das erfindungsgemässe Verfahren kann daher mit einer einfach aufgebauten Vorrichtung bequem und weitgehend automatisiert durchgeführt werden.

Nachfolgend wird die Erfindung anhand von Zeichnungen näher erläutert. Dabei zeigt:
- Figur 1: in schematischer Darstellung eine bekannte pH-Elektrode mit einem Ableitelement 281, das in einer ersten von einem Aussenrohr 22 umgebenen Kammer 291, innerhalb eines Innenrohrs 21 und einer daran anschliessenden dünnwandigen, kugelförmigen Glasmembran 25, in einen Innenpuffer 271 getaucht ist,
- Figur 2a: ein vorzugsweise ausgestaltetes Tauchrohr 2 vor der Entnahme eines Glaspostens 24,
- Figur 2b: das Tauchrohr 2 von Figur 2a nach der Entnahme eines Glaspostens 24,
- Figur 2c: das Tauchrohr 2 von Figur 2b nach der Weiterverarbeitung zu einem Glaskörper 20, mit einer durch eine Glasmembran 25, die durch Formung des Glaspostens 24 gebildet wurde, einseitig abgeschlossenen ersten Kammer 291 und der zwischen der Aussenwand des Innenrohrs 21 und der Innenwand des Aussenrohrs 22 gebildeten zweiten Kammer 292,
- Figur 3a: den Glaskörper 20 von Figur 2c mit in die erste Kammer 291 eingefülltem Innenpuffer 271 und eingesetztem Ableitelement 281, das mit einem Steckkontakt 283 verbunden ist,
- Figur 3b: den Glaskörper 20 von Figur 3a nach dem Abschliessen der ersten Kammer 291 durch Verschmelzen des Innenrohrs 21 anhand eines bekannten Verfahrens,
- Figur 4: den Glaskörper 20 von Figur 2c mit durch ein etwas verlängertes Innenrohr 21 in die erste Kammer 291 eingefülltem Innenpuffer 271 und eingesetztem Ableitelement 281, das mittels einer Verformung 288 zentriert und mittels eines von einem ringförmigen Glaselement 286 umschlossenen Verbindungselements 2851 und einer Pressverbindung 284 mit einem Steckkontakt 283 verbunden ist,
- Figur 5: den oberen Teil einer erfindungsgemässen Vorrichtung 1 mit einem mittels Schienen 12 geführten und mittels eines ersten Motors 13 sowie einer Antriebsspindel 14 angetriebenen Schlitten 11, auf den ein zweiter Motor 15 mit parallel zur Fahrbahn des Schlittens 11 ausgerichteter Antriebswelle 16 aufgesetzt ist, über die das Innenrohr 21 des Glaskörpers von Figur 4 geführt ist,
- Figur 6: den unteren Teil der Vorrichtung 1 mit Energiestrahlern 17 und einem mit wenigstens einer Lichtschranke 53 versehenen Führungsblock 40, der einen Hohlzylinder 41 aufweist, in den der Glaskörper 20 bis zum Erreichen der Lichtschranke 53 eingeführt ist,
- Figur 7: den unteren Teil der Vorrichtung 1 nach dem minimalen Anheben des Glaskörpers 20 in einen Bereich, in dem das ringförmige Glaselement 286 im oberen Bereich der Strahlungszone der anschliessend in Betrieb gesetzten Energiestrahler 17 positioniert ist, und
- Figur 8: den unteren Teil der Vorrichtung 1 nach dem Verschmelzen des ringförmigen Glaselements 286 mit dem Innerohr 21 , dessen unterer Teil 212 zusammen mit dem Aussenrohr 22 nach unten gleitet, die dem Abschalten der Energiestrahler 17 dienende Lichtschranke 53 durchtritt und an der Stirnseite 451 einer von unten in den Hohlzylinder 41 eingedrehten Schraube 45 anhält.

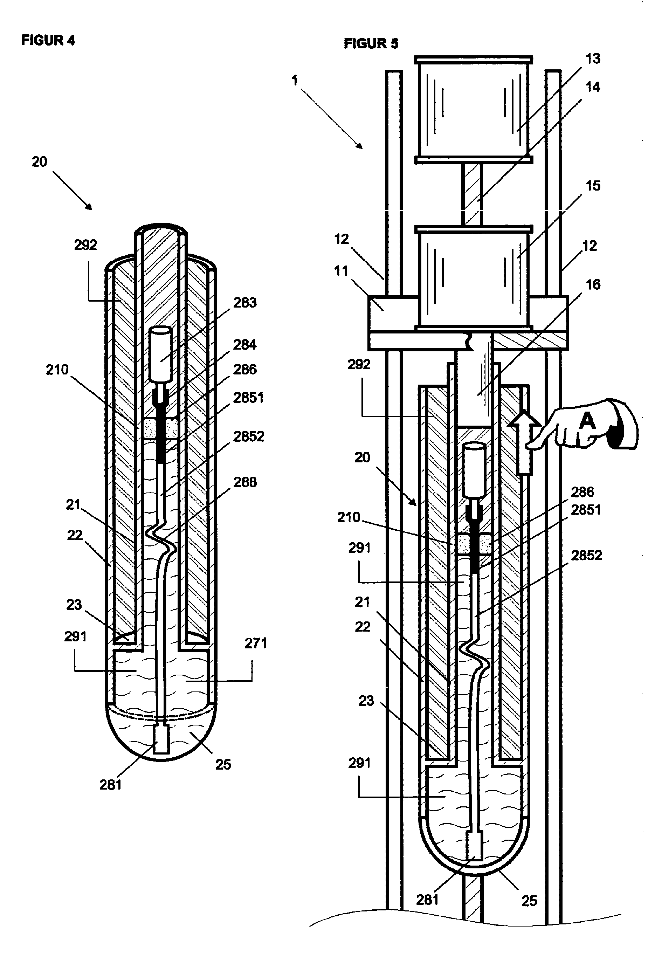

Die erfindungsgemässe Vorrichtung 1 und das erfindungsgemässe Verfahren werden anhand der in den Figuren 4 bis 8 beispielsweise gezeigten Ausgestaltungen erläutert. Wesentliche Verfahrensschritte sind mit A, ..., G gekennzeichnet und durch Darstellung einer Hand symbolisiert.

Figur 1 zeigt in schematischer Darstellung eine bekannte pH-Elektrode mit einem Ableitelement 281, das in einer ersten von einem Aussenrohr 22 umgebenen Kammer 291, innerhalb eines Innenrohrs 21 und einer daran anschliessenden dünnwandigen, kugelförmigen Glasmembran 25, in einen Innenpuffer 271 getaucht ist. Die Funktion dieser pH-Elektrode wurde eingangs erläutert.

Anhand der Figuren 2a bis 2c wurde ferner die Herstellung eines Glaskörpers 20 beschrieben, der nach dem erfindungsgemässen Verfahren bearbeitet werden kann.

Anhand der Figuren 3a und 3b wurde ein bekanntes Verfahren zur Bearbeitung des Glaskörpers 20 beschrieben, in dessen erste Kammer 291 ein Innenpuffer 271 eingefüllt und ein mit einem Steckkontakt 283 verbundenes Ableitelement 281 eingesetzt ist. Figur 3b zeigt den Glaskörper 20 von Figur 3a nach dem Abschliessen der ersten Kammer 291 durch Verschmelzen des Innenrohrs 21 anhand des bekannten Verfahrens.

Figur 4 zeigt den Glaskörper 20 von Figur 2c mit einem etwas verlängerten Innenrohr 21, durch das ein Innenpuffer 271 in die erste Kammer 291 eingefüllt wurde. Durch das Innenrohr 21 wurde ferner ein Ableitelement 281 in die erste Kammer 291 eingeführt, das mittels einer spiralartigen Verformung 288 der beispielsweise aus Silber/Silberchlorid bestehenden Anschlussleitung 2852 innerhalb des Innenrohrs 21 zentriert ist. Die aus Silber/Silberchlorid bestehende Anschlussleitung 2852 ist mit einer Verbindungsleitung 2851 verbunden, die in dieser vorzugsweisen Ausgestaltung mittels einer Pressverbindung 284 an einen Steckkontakt angeschlossen und in dem zu verschmelzenden Teil 210 des Innenrohrs 21 positioniert ist.

Die aus einem Edelmetall (beispielsweise Platin) bestehende Verbindungsleitung 2851 ist von einem ringförmigen Glaselement 286 umschlossen, das zur Absorption von Strahlungsenergie geeignet ist. Das der Absorption von Strahlungsenergie dienende Glaselement 286 enthält vorzugsweise einstückige oder mehrstückige oder in Partikelform vorliegende Metalloxyde, oder Metalle, beispielsweise Eisenoxyd, die mittels Zufuhr von Strahlungsenergie, beispielsweise Infrarotstrahlung, oder durch induktive Ankopplung erhitzt werden und das Glaselement 286 zum Schmelzen bringen. Verwendbar sind weitere Materialien, die mittels Zufuhr von Strahlungsenergie erwärmt werden können. Wie oben erwähnt, können auch mehrere der Absorption von Strahlungsenergie dienende Glaselemente 286 verwendet werden. Ferner kann dieses auch pulverförmig vorliegen. Ein Glaselement 286 kann prinzipiell entweder im Bereich der Verbindungsleitung 2851 oder im Bereich der Anschlussleitung 2852 positioniert sein.

Eine Vorrichtung zum Verschmelzen eines Glasrings mittels Infrarotstrahlung ist aus [6], U.S. Patent US 6,354,901 B1 bekannt. Durch das Verschmelzen des Glasrings wird dort eine Öffnung einer Entladungslampe abgeschlossen, durch die eine Elektrode hindurchgeführt ist. Der Glasring wird dabei an der Öffnung der Entladungslampe angesetzt und verschmolzen, so dass geschmolzenes Material vertikal von oben in die Öffnung hinein fliessen kann, ohne dass das Glas der Entladungslampe selbst verschmolzen wird.

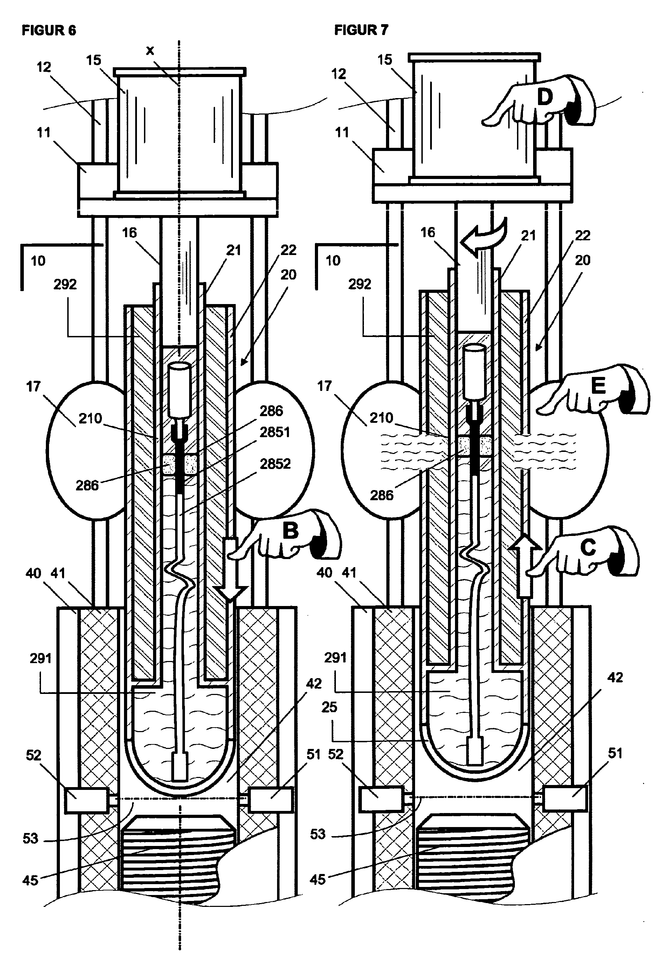

Zur erfindungsgemässen Bearbeitung der Glaskörper 20 werden diese derart in den Bereich wenigstens eines Energiestrahlers 17 (siehe die Figuren 6 bis 8) verschoben, dass das Glaselement 286 mit der notwendigen Strahlungsenergie beaufschlagt werden kann. Wie oben beschrieben, ist beim erfindungsgemässen Verfahren zudem wesentlich, dass der Schmelzvorgang und die Kräfte, die auf die an die Schmelzzone angrenzenden Teile einwirken, präzise kontrolliert werden. Dazu ist die in den Figuren 5 bis 8 gezeigte erfindungsgemässe Vorrichtung 1 vorteilhaft verwendbar.

Figur 5 zeigt den oberen Teil der erfindungsgemässen Vorrichtung 1, die einen mittels Schienen 12 geführten und mittels eines ersten Antriebsmotors 13 sowie einer Antriebsspindel 14 angetriebenen Schlitten 11 aufweist. Auf den Schlitten 11 ist ein zweiter Antriebsmotor 15 aufgesetzt, dessen Antriebswelle 16 parallel zur Fahrbahn des Schlittens 11, vertikal nach unten ausgerichtet ist.

In der gezeigten Ausgestaltung entspricht der Durchmesser der Antriebswelle 16 dem Innendurchmesser des Innenrohrs 21 des in Figur 4 gezeigten Glaskörpers 20, so dass dieses in einem Verfahrensschritt A über die Antriebswelle 16 geschoben werden kann. Das Innenrohr 21 kann selbstverständlich auch an seiner Aussenseite gefasst und gehalten werden.

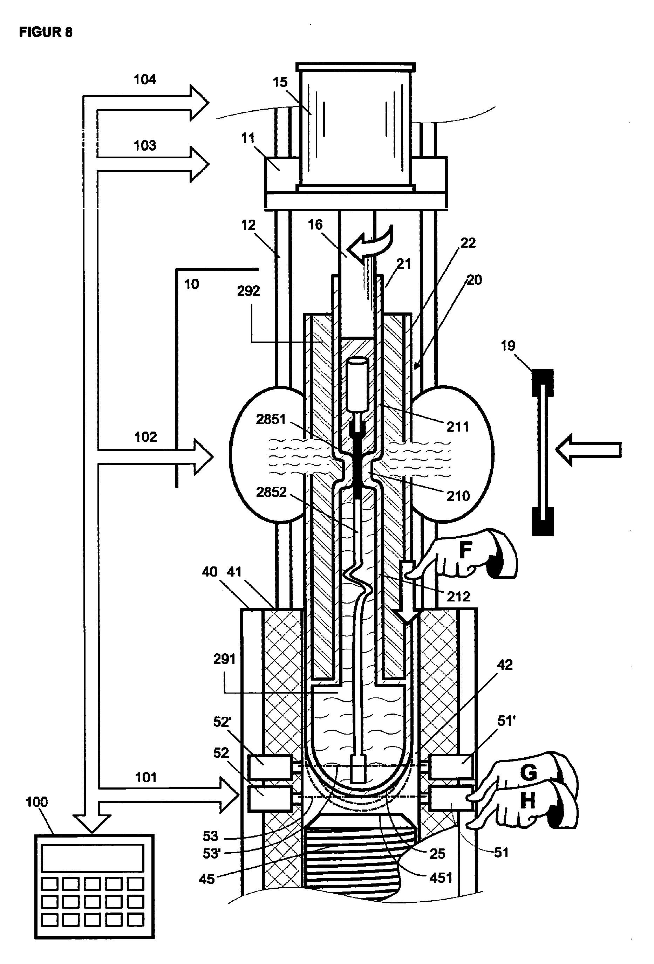

Figur 6 und Figur 7 zeigen den unteren Teil der Vorrichtung 1 mit zwei schematisch dargestellten Energiestrahlern 17 und einem mit wenigstens einer Lichtschranke 53 versehenen Führungsblock 40, die in einem Gehäuse 10 angeordnet sind. Der Schlitten 11 wird in einem Verfahrensschritt B soweit nach unten gefahren, dass der Glaskörper 20 in einen mit dem Führungsblock 40 verbundenen, in Schnittdarstellung gezeigten Hohlzylinder 41 bis zur Lichtschranke 53 eindringt, die durch eine Lichtquelle 51 und einen mit einer Steuereinheit 100 (siehe Figur 8) verbundenen optischen Sensor 52 gebildet wird.

Für den Verfahrensschritt B dient die Lichtschranke 53 daher als Referenzlinie, mittels derer der Steuereinheit 100 angezeigt wird, dass der Schlitten 11 bzw. der zu bearbeitende Glaskörper 20 eine bestimmte Position erreicht hat. Die Steuereinheit 100 kann den Schlitten 11 daher anhalten und in einem weiteren Verfahrensschritt C um eine vorgegebene Distanz nach oben verschieben, bis das im Glaskörper 20 positionierte Glaselement 286 im Wirkungsbereich der Energiestrahler 17 liegt. Dieser Verfahrensschritt (C) kann eingespart werden, sofern, wie in Figur 8 gezeigt, eine zweite Lichtschranke 51', 52', 53' vorgesehen und entsprechend positioniert ist. In diesem Fall wird der Glaskörper mit Verfahrensschritt B bis zu dieser zweiten Lichtschranke 51', 52', 53' geführt und angehalten, wonach unmittelbar Verfahrensschritt D folgt. Die erste und/oder die zweite Lichtschranke 51, 52, 53, 51', 52', 53' können auch durch einen nichtoptischen Sensor ersetzt sein, beispielsweise durch einen kapazitiven Sensor.

In einem weiteren vorzugsweise vorgesehenen Verfahrensschritt D (siehe Figur 7) wird der zweite Antriebsmotor 15 in Betrieb gesetzt, so dass der von der Antriebswelle 16 gehaltene und in den Innenraum 42 des Hohlzylinders 41 geführte Glaskörper 20 in Rotation versetzt wird. Anschliessend, mit Verfahrensschritt E, werden die Energiestrahler 17 zugeschaltet, wodurch das Glaselement 286 erwärmt wird und zu fliessen beginnt. Aufgrund der durch die Rotationsbewegung verursachten Fliehkräfte wird das geschmolzene Material des Glaselements 286 in seiner Form abgeflacht und nach aussen gegen die Innenwand des zu verschmelzenden Teils 210 des Innenrohrs 21 gedrückt, so dass auch dieses idealerweise gleichmässig erwärmt wird, zu schmelzen beginnt und mit dem Glaselement verschmilzt, wodurch, das Verbindungselement 2851 fest umschliessend, die erste Kammer 291 dicht abschlossen wird.

Figur 8 zeigt das Glasrohr 20 nach dem Verschmelzen des Glaselements 286 und des umliegenden Teils 210 des Innenrohrs 21 sowie während des Fliessens der geschmolzenen Masse (Verfahrensschritt F). Der Fliessvorgang verursacht eine Verjüngung des erwärmten Innenrohrteils 210, hervorgerufen durch das vertikale Absinken des nur noch vermittels der weichen Schmelzzone mit dem befestigten oberen Teil 211 verbundenen unteren Teils 212 des Innenrohrs 21 bzw. des Tauchrohrs 20. Das obere Teil 211 des Innenrohrs 21 bleibt somit fest von der Antriebswelle 16 gehalten, während das untere Teil 212 mitsamt dem restlichen Glaskörper 20 nach unten absinkt, bis die die erste Kammer 291 abschliessende Glasmembran 25 auf einen Anschlag auftrifft (Verfahrensschritt H), der durch eine von unten in den Hohlzylinder 41 eingedrehte Schraube 45 gebildet wird. Durch die entsprechend justierte Schraube 45 wird dabei bewirkt, dass das Innenrohr 21 nur entlang einer gewünschten Länge verschoben wird.

An dieser Stelle sei erwähnt, dass eine Verjüngung des Innenrohrs im Bereich der Schmelzzone keine zwingende Voraussetzung für die Herstellung eines dichten Abschlusses der Kammer 291 ist und daher unerheblich für deren Dichtheit ist. Hierfür ist das Ineinander-Verschmelzen des Glaselements 286 und des zu verschmelzenden Teils 210 der Wand des Innenrohrs massgebend. Die Verjüngung ist vielmehr eine Folge des Absinkens des unteren Teils 212 des Innenrohrs 21.

Zur Bearbeitung von Tauchrohren 20 mit unterschiedlichen Abmessungen sind vorzugsweise der Hohlzylinder 41 und die darin eingedrehte Schraube 45 um das erforderliche Mass justierbar. Beispielsweise wird der Hohlzylinder 41 auf einem zweiten, unteren Schlitten verschiebbar gelagert, der wie der erste, obere Schlitten 11 entlang der in Figur 6 eingezeichneten Arbeitsachse x verschiebbar ist. Die Arbeitsachse x der Vorrichtung 1 ist in den möglichen Ausgestaltungen vorzugsweise vertikal ausgerichtet, kann aber auch geneigt sein.

Bevor der Glaskörper 20 auf die Schraube 45 trifft, durchläuft er die Lichtschranke 53 (Verfahrensschritt G), so dass der Fliessvorgang von der Steuervorrichtung 100 erkannt wird. Die Energiestrahler 17 können daher, gegebenenfalls nach einer programmierten Verzögerung, ausgeschaltet werden, so dass eine übermässige Erwärmung des übrigen Glaskörpers 20 vermieden wird.

Figur 8 zeigt ferner die über Anschlussleitungen 101, ...104 mit den beiden Antriebsmotoren 13, 15; mit den Energiestrahlern und den Lichtschranken 51, 52, 53; 51', 52', 53' verbundene und mit einer Tastatur sowie einer Anzeige versehene Steuereinheit 100. Das schematisch dargestellte Gehäuse 10 weist eine Tür 19 mit einem Schutzglas, beispielsweise einer Filterplatte auf, durch die der Schmelzvorgang betrachtet und kontrolliert werden kann.

Die erfindungsgemässe Vorrichtung 1 und das erfindungsgemässe Verfahren wurden in bevorzugten Ausgestaltungen beschrieben und dargestellt. Anhand der erfindungsgemässen Lehre sind jedoch weitere fachmännische Ausgestaltungen realisierbar. Insbesondere können verschiedenartige Glaskörper nach dem erfindungsgemässen Verfahren bearbeitet werden. Die Vorrichtung 1 wurde der Bearbeitung der gezeigten Glaskörper angepasst. In Kenntnis der wesentlichen Funktionen kann die erfindungsgemässe Vorrichtung 1, gegebenenfalls durch kinematische Umkehr, jedoch auch an weitere zu bearbeitende Glaskörper angepasst werden. Ferner kann der Automatisierungsgrad der Vorrichtung 1 nach Bedarf gewählt werden.

Die gezeigten Glaskörper sind für den Einbau in chemische Sensoren bzw. Messsonden vorgesehen. Selbstverständlich lassen sich jedoch auch beliebige andere mehrwandige Glaskörper nach dem erfindungsgemässen Verfahren bearbeiten.

Selbstverständlich können mit dem erfindungsgemässen Verfahren auch mehrwandige Glaskörper bearbeitet werden, in denen zwei oder mehr Kammern abzuschliessen oder Wände miteinander zu verbinden sind. Dazu werden beispielsweise zwei oder mehrere entsprechend ausgestaltete Glaselemente, die zur Absorption von Strahlungsenergie geeignet sind, in den Glaskörper eingeführt.

Anstelle einer Anschlussleitung 2852 bzw. eines Ableitelements 281 und der während der Bearbeitung nicht schmelzenden Verbindungsleitung 2851 können, wie in Figur 2a gezeigt, auch entsprechende metallene Leiter 2851', 2852' vorgesehen sein, die auf der Innenseite des Innenrohrs 21 in einer oder mehreren Lagen aufgebracht sind.

### Bezugszeichenliste

- 1: Vorrichtung
- 2: Tauchrohr
- 11: Schlitten
- 12: Schienen
- 13: erster Motor
- 14: Antriebsspindel
- 15: zweiter Motor
- 16: Antriebswelle
- 17: Energiestrahler
- 19: Tür mit Schutzglas
- 20: Glaskörper
- 21: Innenrohr
- 22: Aussenrohr
- 23: Teller
- 24: Glasposten
- 25: Glasmembran
- 26: Diaphragma
- 40: Führungsblock
- 41: Hohlzylinder
- 42: Innenraum des Hohlzylinders 41
- 45: Schraube
- 51, 52, 53: erste Lichtschranke
- 51', 52', 53': zweite Lichtschranke
- 100: Steuereinheit
- 101, ...104: Anschlussleitungen
- 210: verschmolzenes Teil des Innenrohrs 21
- 211: oberes Teil des Innenrohrs 21
- 212: unteres Teil des Innenrohrs 21
- 271: Innenpuffer
- 272: KCl-Lösung
- 281: Ableitelement
- 282: Bezugselement
- 283: Steckkontakt
- 284: Pressverbindung
- 285: Anschlussdraht
- 286: Glaselement
- 288: Verformung
- 291: erste Kammer
- 292: zweiten Kammer
- 451: Stirnseite der Schraube 45
- 2851: Verbindungsleitung
- 2852: Anschlussleitung

### Literaturverzeichnis

[1] Produktblatt "Low-maintenance pH electrodes and systems" der Mettler-Toledo GmbH, CH-8902 Urdorf vom September 2002
[2] Produktblatt "InPro 2000 pH-Elektroden mit Flüssigelektrolyt und integriertem Temperaturfühler" der Mettler-Toledo GmbH, CH-8902 Urdorf vom Oktober 2000
[3] Produktblatt "InPro 3200(SG) pH-Elektroden mit Gelelektrolyt und integriertem Temperaturfühler" der Mettler-Toledo GmbH, CH-8902 Urdorf vom Januar 2002
[4] Charles E. Mortimer, Chemie, Das Basiswissen der Chemie, 5. Auflage, Georg Thieme Verlag, New York 1987
[5] CH Patent CH 670 516 A5
[6] U.S. Patent US 6,354,901 B1

## Patentansprüche

1. Verfahren zur Bearbeitung eines mehrwandigen Glaskörpers, insbesondere eines mit einer Glasmembran (25) versehenen Glaskörpers (20), innerhalb dessen wenigstens eine von einem Aussenrohr (22) umschlossene Wand oder ein Innenrohr (21) teilweise zu verschmelzen und dadurch gegebenenfalls eine erste Kammer (291) abzuschliessen ist, wobei wenigstens ein der Absorption von Strahlungsenergie dienendes, pulverförmiges oder festes Glaselement (286) in den Bereich des zu verschmelzenden Teils (210) der Wand oder des Innenrohrs (21) geführt und von wenigstens einem Energiestrahler (17) derart mit Strahlungsenergie beaufschlagt wird, dass das Glaselement (286) und das zu verschmelzende Teil (210) der Wand oder des Innenrohrs (21) ineinander verschmelzen, **dadurch gekennzeichnet, dass** eine durch den Schmelzvorgang resultierende Absenkung des Innenrohrs (21) erfasst wird und der Schmelzvorgang entsprechend gesteuert wird.

2. Verfahren nach Anspruch 1, **dadurch gekennzeichnet, dass** im Bereich der Wand oder des Innenrohrs (21) drahtförmige oder schichtweise an der Wand oder dem Innenrohr (21) haftende metallene Leiter (2851, 2852; 2851', 2852') vorgesehen sind.

3. Verfahren nach Anspruch 1 oder 2, **dadurch gekennzeichnet, dass** in das einseitig abgeschlossene Innenrohr (21) das vorzugsweise ringförmige Glaselement (286) und eine während der Bearbeitung nicht schmelzende Verbindungsleitung (2851) vorzugsweise aus Platin eingeführt wird, die durch das zu verschmelzende Teil (210) des Innenrohrs (21) hindurch ein in die mit einem Medium (271) gefüllte erste Kammer (291) hineinragendes Ableitelement (281, 2852) mit einem ausserhalb der ersten Kammer (291) angeordneten Anschlussteil oder einem Steckkontakt (283) verbindet.

4. Verfahren nach Anspruch 1, 2 oder 3, **dadurch gekennzeichnet, dass** das der Absorption von Strahlungsenergie dienende Glaselement (286) ein- oder mehrstückige oder in Partikelform vorliegende Metalloxyde oder Metalle, wie Eisenoxyd, aufweist, die mittels Zufuhr von Strahlungsenergie, durch Infrarotstrahlung oder durch induktive Ankopplung, erhitzt werden.

5. Verfahren nach Anspruch 1, 2, 3 oder 4, **dadurch gekennzeichnet, dass** ein mittels Schienen (12) geführter, motorisch angetriebener Schlitten (11) vorgesehene ist, an dem der Glaskörper (20), mit seiner Längsachse vorzugsweise vertikal ausgerichtet, befestigt und anschliessend in einen Bereich gefahren wird, in dem die Strahlungsenergie auf das Glaselement (286) einwirken kann.

6. Verfahren nach Anspruch 5, **dadurch gekennzeichnet, dass** das Innenrohr (21) des Glaskörpers (20) mit dem Schlitten (11) verbunden wird, so dass nach der Einwirkung der Strahlungsenergie und dem Verschmelzen des Glaselements (286) sowie des anliegenden Teils (210) des Innenrohrs (21) der nur vom geschmolzenen Teil (210) des Innenrohrs (21) gehaltene Teil des Glaskörpers (20) absinkt, was mittels eines Sensors, insbesondere einer Lichtschranke (53) oder eines kapazitiven Sensors, detektiert und einer Steuereinheit (100) gemeldet wird, welche den Energiestrahler (17) abschaltet.

7. Verfahren nach Anspruch 5 oder 6, **dadurch gekennzeichnet, dass** der Glaskörper (20) vor dem Verschmelzen des Innenrohrs (21) bis zur Lichtschranke (53) abgesenkt und anschliessend in den Bereich gefahren wird, in dem die Strahlungsenergie auf das Glaselement (286) einwirken kann.

8. Verfahren nach Anspruch 5, 6 oder 7, **dadurch gekennzeichnet, dass** der Glaskörper (20) in einem gegebenenfalls verschiebbar gelagerten Führungsblock (40) axial geführt wird, und/oder dass ein vorzugsweise justierbarer Anschlag (45) vorgesehen ist, auf den der Glaskörper (20) nach Durchlaufen der Lichtschranke (53) auftrifft.

9. Verfahren nach Anspruch 5, 6, 7 oder 8, **dadurch gekennzeichnet, dass** das Innenrohr (21) des Glaskörpers (20) mit einer parallel zur Laufrichtung des Schlittens (11) ausgerichteten Antriebswelle (16) eines auf dem Schlitten (11) angeordneten Antriebsmotors (15) verbunden wird, der vor oder während der Erwärmung des Glaselements (286) in Betrieb gesetzt wird.

10. Vorrichtung (1) zur Durchführung des Verfahrens nach einem der Ansprüche 1 bis 9 zur Bearbeitung eines mehrwandigen Glaskörpers, insbesondere eines mit einer Glasmembran (25) versehenen Glaskörpers (20), innerhalb dessen wenigstens eine von einem Aussenrohr (22) umschlossene Wand oder ein Innenrohr (21) teilweise zu verschmelzen und dadurch gegebenenfalls eine erste Kammer (291) abzuschliessen ist, wobei ein in den Glaskörper (20) eingesetztes Glaselement (286) vorhanden ist und der Glaskörper (20) in einen Bereich verschiebbar ist, in dem die von wenigstens einem Energiestrahler (17) abgebbare Strahlungsenergie auf das in den Glaskörper (20) eingesetzte Glaselement (286) einwirken kann, **dadurch gekennzeichnet, dass** eine mit wenigstens einem Sensor verbundene Steuereinheit (100) vorhanden ist, mittels derer eine durch den Schmelzvorgang resultierende Absenkung des Innenrohrs (21) erfassbar und der Schmelzvorgang entsprechend steuerbar ist.

11. Vorrichtung nach Anspruch 10, **dadurch gekennzeichnet, dass** ein mittels Schienen (12) geführter, motorisch angetriebener und gesteuerter Schlitten (11) vorgesehen ist, an dem der Glaskörper (20) mit seiner Längsachse vorzugsweise vertikal ausgerichtet, befestigbar ist.

12. Vorrichtung (1) nach Anspruch 10 oder 11, **dadurch gekennzeichnet, dass** der zur Steuerung des Verfahrensablaufs wenigstens eine mit der Steuereinheit (100) verbundene Sensor, vorzugsweise eine Lichtschranke (51, 52, 53; 51', 52', 53'), die vom Glaskörper (20) während des Verschiebens des Schlittens (11) durchlaufen wird, oder einen kapazitiver Sensor umfasst, wobei der Schlitten (11) mittels des Sensors oder der Lichtschranke (51, 52, 53; 51', 52', 53') im Bereich anhaltbar oder in den Bereich verschiebbar ist, in dem die von wenigstens einem Energiestrahler (17) abgebbare Strahlungsenergie auf das Glaselement (286) einwirken kann.

13. Vorrichtung (1) nach Anspruch 12, **dadurch gekennzeichnet, dass** die vorzugsweise senkrecht zur Laufrichtung des Schlittens (11) ausgerichtete Lichtschranke (51, 52, 53) derart angeordnet ist, dass sie vom Glaskörper (20) während des Erwärmens des Glaselements (286) durchlaufen wird, so dass die Energiestrahler (17) von der Steuereinheit (100) zu diesem Zeitpunkt oder leicht verzögert abschaltbar sind.

14. Vorrichtung (1) nach Anspruch 12 oder 13, **dadurch gekennzeichnet, dass** ein mit dem Sensor, insbesondere dem kapazitiven Sensor oder der wenigstens einen Lichtschranke (51, 52, 53; 51', 52', 53') versehener Führungsblock (40) vorgesehen ist, der zur Aufnahme und axialen Führung des Glaskörpers (20) dient und der vorzugsweise verschiebbar gelagert ist.

15. Vorrichtung (1) nach Anspruch 14, **dadurch gekennzeichnet, dass** innerhalb des Führungsblocks (40) ein vorzugsweise justierbarer Anschlag (45) vorgesehen ist, auf den der Glaskörper (20) nach Durchlaufen der Lichtschranke (53) oder Passieren des Sensors, insbesondere des kapazitiven Sensors auftrifft.

16. Vorrichtung (1) nach einem der Ansprüche 11 bis 15, **dadurch gekennzeichnet, dass** ein auf dem Schlitten (11) angeordneter Antriebsmotor (15), der mittels der Steuereinheit (100) vor oder während der Erwärmung des Glaselements (286) einschaltbar ist, mit einer parallel zur Laufrichtung des Schlittens (11) ausgerichteten Antriebswelle (16) versehen ist, mit der das Innenrohr (21) des Glaskörpers (20) verbindbar ist.

## Claims

1. Method for treating a multi-walled glass body, in particular a glass body (20) that is equipped with a glass membrane (25), wherein inside the glass body a fusion-melting step is to be performed on a portion of at least one wall that is enclosed by an exterior tube (22), or on a portion of an interior tube (21), and wherein said fusion-melting step can serve to close off a first chamber (291), wherein at least one glass element (286) in solid or powder form and serving to absorb radiation energy is inserted in the vicinity of portion (210) of the wall or of the interior tube (21) that is to be fused, and wherein said glass element (286) is exposed to radiation energy generated by at least one energy radiator (17) in such a manner that the glass element (286) and said portion (210) of the wall or of the interior tube (21) are fused together, **characterized in that** a downward movement of the interior tube (21) caused by the fuse-melting step is detected and the fusion-melting process is controlled, accordingly.

2. Method according to claim 1, **characterized in that** metallic conductors (2851, 2852; 2851', 2852') are provided in the vicinity of the wall or of the interior tube (21), said conductors having the form of wires or of surface layers adhering to the wall or to the interior tube (21).

3. Method according to claim 1 or 2, **characterized in that** the preferably ring-shaped glass element (286) and a terminal lead (2851) which does not melt during the fusion-melting step and is preferably made of platinum are inserted into the interior tube (21) after the latter has been closed off at one end, wherein said terminal lead (2851) passes through the to-be-fused portion (210) of the interior tube (21) and connects a lead-off element (281, 2852) immersed in a medium (271) occupying the first chamber (291) with a connector part or contact plug (283) that is arranged outside of the first chamber (291).

4. Method according to claim 1, 2 or 3, **characterized in that** the glass element (286) which serves to absorb radiation energy comprises metal oxides or metals, for example iron oxide, which are present as a single piece, in a plurality of pieces, or in particle form and which are heated by exposure to radiation energy, through infrared radiation or through inductive coupling.

5. Method according to claim 1, 2, 3 or 4, **characterized in that** a sliding stage (11) is provided which is guided by track rails (12) and driven by a motor, that the glass body (20) is attached to the sliding stage in a preferably vertically aligned position of the longitudinal axis of the glass body, and that the sliding stage (11) is subsequently moved into a range where the radiation energy can have an effect on the glass element (286).

6. Method according to claim 5, **characterized in that** the interior tube (21) of the glass body (20) is attached to the sliding stage (11) so that, after the radiation energy has been applied and after the glass element (286) and the adjacent portion (210) of the interior tube (21) have been fused, the part of the glass body (20) that is held only by the molten portion (210) of the interior tube (21) is pulled downward by its own weight until the downward movement is detected by means of a sensor, which can consist of a light gate (53), and a signal is sent to a control unit (100) which switches the energy radiator (17) off.

7. Method according to claim 5 or 6, **characterized in that,** prior to the fusing of the interior tube (21), the glass body (20) is lowered to the level of the light gate (53) and subsequently raised into the range where the radiation energy can have an effect on the glass element (286).

8. Method according to claim 5, 6 or 7, **characterized in that** the glass body (20) is guided in the axial direction by a guide block (4) which can be movably supported, and/or that an end stop (45) is provided which is preferably adjustable, so that the glass body (20) meets the end stop subsequent to traversing the light gate (53).

9. Method according to claim 5, 6, 7 or 8, **characterized in that** the interior tube (21) of the glass body (20) is connected to a rotary drive shaft (16) of a motor (15) that is mounted on the sliding stage (11), said rotary drive shaft (16) being in parallel alignment with the direction of movement of the sliding stage (11), and wherein said motor is set in motion before and during the heating of the glass element (286).

10. Apparatus (1) for performing the method according to one of the claims 1 to 9 for treating a multi-walled glass body, in particular a glass body (20) that is equipped with a glass membrane (25), wherein inside the glass body a fusion-melting step is to be performed on a portion of at least one wall that is enclosed by an exterior tube (22), or on a portion of an interior tube (21), and wherein said fusion-melting step can serve to close off a first chamber (291), wherein at least one glass element (286) has been set in place in the glass body (20) and wherein the glass body (20) can be moved into a range in which the radiation energy emitted by at least one energy radiator (17) can act on the glass element (286), **characterized in that** a control unit (100) that is connected to at least one sensor (51, 52, 53) is provided, by means of which a downward movement of the interior tube (21) caused by the fusion-melting process can be detected and the fusion melting process can be controlled, accordingly.

11. Apparatus (1) according to claim 10, **characterized in that** a sliding stage (11) is provided which is guided by track rails (12) and driven and controlled by a motor, wherein the glass body (20) can be attached to the sliding stage (11) with a preferably vertical orientation of the longitudinal axis of the glass body.

12. Apparatus (1) according to claim 10 or 11, **characterized in that** at least one sensor in connection with the control unit (100) is provided for the control of the procedural steps, preferably comprising a light gate (51, 52, 53; 51', 52', 53') that is traversed by the glass body (20) during the movement of the sliding stage (11) or a capacitive sensor, wherein by means of the sensor or light gate (51, 52, 53; 51', 52', 53') the sliding stage (11) can be stopped in, or moved into, the range in which the radiation energy emitted by at least one energy radiator (17) can act on the glass element (286) .

13. Apparatus (1) according to claim 12, **characterized in that** the light gate (51, 52, 53; 51', 52', 53'), which is preferably oriented perpendicular to the direction of movement of the sliding stage (11), is arranged in such a manner that the glass body (20) traverses the light gate during the heating of the glass element (286), so that the energy radiators (17) can be switched off by the control unit (100) at the time the light gate is being traversed, or with a slight time delay.

14. Apparatus (1) according to claim 12 or 13, **characterized in that** a guide block (40) is provided, which is equipped with the sensor or at least one light gate (51, 52, 53; 51', 52', 53'), wherein the guide block (40) serves to receive and axially guide the glass body (20), and wherein the guide block is preferably supported in a manner that allows its position to be changed.

15. Apparatus (1) according to claim 14, **characterized in that** within said guide block (40) an end stop (45) is provided which is preferably adjustable, so that the glass body (20) meets the end stop subsequent to traversing the light gate (53) or passing the sensor, particularly the capacitive sensor.

16. Apparatus (1) according to one of the claims 11 to 15, **characterized in that** a drive motor (15) is arranged on the sliding stage (11), wherein by means of the control unit (100) said drive motor can be switched on before and during the heating of the glass element (286), wherein the drive motor is equipped with a rotary drive shaft (16) that is oriented parallel to the direction of movement of the sliding stage (11), and wherein the interior tube (21) of the glass body (20) can be connected to the rotary drive shaft (16).

## Revendications

1. Procédé pour le traitement d'un corps vitreux à plusieurs parois, en particulier d'un corps vitreux (20) doté d'une membrane de verre (25), à l'intérieur duquel au moins une paroi entourée d'un tuyau extérieur (22) ou un tuyau intérieur (21) doit être en partie fondue et une première chambre (291) devant être ainsi fermée le cas échéant, sachant qu'au moins un élément vitreux (286) pulvérulent ou solide, servant à l'absorption d'énergie de rayonnement, est guidé dans la zone de la partie (210) à fondre de la paroi ou du tuyau intérieur (21) et est alimenté avec de l'énergie de rayonnement par au moins un dispositif de rayonnement d'énergie (17) de sorte que l'élément vitreux (286) et la partie (210) à fondre de la paroi ou du tuyau intérieur (21) se fondent l'un dans l'autre, **caractérisé en ce qu'**un abaissement, résultant de l'opération de fusion, du tuyau intérieur (21) est enregistré et l'opération de fusion est commandée en conséquence.

2. Procédé selon la revendication 1, **caractérisé en ce que** des conducteurs (2851, 2852 ; 2851', 2852') métalliques, en forme de fil ou adhérant en couches à la paroi ou au tuyau intérieur (21) sont prévus dans la zone de la paroi ou du tuyau intérieur (21).

3. Procédé selon la revendication 1 ou 2, **caractérisé en ce que** l'élément vitreux (286) de préférence annulaire et une ligne de liaison (2851) qui ne fond pas pendant le traitement de préférence en platine sont introduits dans le tuyau intérieur (21) fermé d'un côté, laquelle conduite relie à travers la partie (210) à fondre du tuyau intérieur (21) un élément conducteur (281, 2852) avancant dans la première chambre (291) remplie d'un agent (271) à une partie de raccordement, disposée à l'extérieur de la première chambre (291), ou un contact enfichable (283).

4. Procédé selon la revendication 1, 2 ou 3, **caractérisé en ce que** l'élément vitreux (286) servant à l'absorption d'énergie de rayonnement présente des oxydes de métal ou des métaux, tels que l'oxyde de fer, présents en une seule pièce ou en plusieurs pièces ou sous forme de particules, qui sont réchauffés par l'apport d'énergie de rayonnement, par rayonnement infrarouge ou par accouplement inductif.

5. Procédé selon la revendication 1, 2, 3 ou 4, **caractérisé en ce qu'**un coulisseau (11) guidé au moyen de rails (12) et entraîné par moteur est prévu, sur lequel le corps vitreux (20) est fixé orienté avec son axe longitudinal de préférence verticalement, et déplacé ensuite dans une zone dans laquelle l'énergie de rayonnement peut agir sur l'élément vitreux (286).

6. Procédé selon la revendication 5, **caractérisé en ce que** le tuyau intérieur (21) du corps vitreux (20) est relié au coulisseau (11) de sorte que, après l'action de l'énergie de rayonnement et la fusion de l'élément vitreux (286) ainsi que de la partie (210) voisine du tuyau intérieur (21), la partie, maintenue seulement par la partie (210) fondue du tuyau intérieur (21), du corps vitreux (20) descend, ce qui est détecté au moyen d'un capteur, en particulier d'une barrière lumineuse (53) ou d'un capteur capacitif, et signalé à une unité de commande (100), laquelle déconnecte le dispositif de rayonnement d'énergie (17).

7. Procédé selon la revendication 5 ou 6, **caractérisé en ce que** le corps vitreux (20) est abaissé avant la fusion du tuyau intérieur (21) jusqu'à la barrière lumineuse (53) et est déplacé ensuite dans la zone où l'énergie de rayonnement peut agir sur l'élément vitreux (286).

8. Procédé selon la revendication 5, 6, ou 7, **caractérisé en ce que** le corps vitreux (20) est guidé axialement dans un bloc de guidage (40) également logé de façon coulissante, et/ou **en ce qu'**une butée (45) de préférence réglable est prévue, sur laquelle le corps vitreux (20) arrive après le passage de la barrière lumineuse (53).

9. Procédé selon la revendication 5, 6, 7 ou 8, **caractérisé en ce que** le tuyau intérieur (21) du corps vitreux (20) est relié à un arbre d'entraînement (16), orienté parallèlement au sens de passage du coulisseau (11), d'un moteur d'entraînement (15) disposé sur le coulisseau (11), qui est mis en service avant ou pendant le réchauffement de l'élément vitreux (286).

10. Dispositif (1) pour la mise en oeuvre du procédé selon l'une quelconque des revendications 1 à 9 pour le traitement d'un corps vitreux à plusieurs parois, en particulier d'un corps vitreux (20) doté d'une membrane de verre (25), à l'intérieur duquel au moins une paroi entourée d'un tuyau extérieur (22) ou un tuyau intérieur (21) doit être en partie fondue et une première chambre (291) doit être fermée éventuellement de ce fait, un élément vitreux (286) inséré dans le corps vitreux (20) étant présent et le corps vitreux (20) pouvant coulisser dans une zone dans laquelle l'énergie de rayonnement pouvant être cédée par au moins un dispositif de rayonnement d'énergie (17) peut agir sur l'élément vitreux (286) inséré dans le corps vitreux (20), **caractérisé en ce qu'**une unité de commande (100) reliée à au moins un capteur est présente, unité au moyen de laquelle un abaissement, résultant de l'opération de fusion, du tuyau intérieur (21) peut être enregistré et l'opération de fusion peut être contrôlée en conséquence.

11. Dispositif selon la revendication 10, **caractérisé en ce qu'**un coulisseau (11) guidé au moyen de rails (12), entraîné par moteur et commandé est prévu, sur lequel le corps vitreux (20) peut être fixé avec son axe longitudinal orienté de préférence verticalement.

12. Dispositif (1) selon la revendication 10 ou 11, **caractérisé en ce que** le au moins un capteur relié à l'unité de commande (100) pour la commande du déroulement du procédé comprend de préférence une barrière lumineuse (51, 52, 53 ; 51', 52', 53'), qui est traversée par le corps vitreux (20) pendant le déplacement du coulisseau (11), ou un capteur capacitif, le coulisseau (11) pouvant s'arrêter au moyen du capteur ou de la barrière lumineuse (51, 52, 53 ; 51', 52', 53') dans la région ou pouvant coulisser dans la région dans laquelle l'énergie de rayonnement pouvant être délivrée par au moins un dispositif de rayonnement d'énergie (17) peut agir sur l'élément vitreux (286).

13. Dispositif (1) selon la revendication 12, **caractérisé en ce que** la barrière lumineuse (51, 52, 53), orientée de préférence perpendiculairement au sens de marche du coulisseau (11) est disposée de telle sorte qu'elle est traversée par le corps vitreux (20) pendant le réchauffement de l'élément vitreux (286), de sorte que les dispositifs de rayonnement d'énergie (17) peuvent être déconnectés par l'unité de commande (100) à ce moment-là ou avec un léger retard.

14. Dispositif (1) selon la revendication 12 ou 13, **caractérisé en ce qu'**un bloc de guidage (40) doté du capteur, en particulier du capteur capacitif ou au moins une barrière lumineuse (51, 52, 53 ; 51', 52', 53') est prévu, lequel sert au logement et au guidage axial du corps vitreux (20) et est logé de préférence de façon coulissante.

15. Dispositif (1) selon la revendication 14, **caractérisé en ce qu'**il est prévu à l'intérieur du bloc de guidage (40) une butée (45) de préférence réglable sur laquelle le corps vitreux (20) arrive après la traversée de la barrière lumineuse (53) ou le passage du capteur, en particulier du capteur capacitif.

16. Dispositif (1) selon l'une quelconque des revendications 11 à 15, **caractérisé en ce qu'**un moteur d'entraînement (15) disposé sur le coulisseau (11), qui peut être enclenché au moyen de l'unité de commande (100) avant ou pendant le réchauffement de l'élément vitreux (286), est doté d'un arbre d'entraînement (16) orienté parallèlement au sens de marche du coulisseau (11), arbre avec lequel le tuyau intérieur (21) du corps vitreux (20) peut être relié.
